# EUROPEAN PATENT APPLICATION

(11) **EP 4 331 528 A1**
(43) Date of publication of application: **06.03.2024**
(21) Application number: 22795776.8
(22) Date of filing: 26.04.2022
(51) Int. Cl.: A61C 5/77, A61C 13/00, B23Q 1/48

(54) **CUTTING MACHINING DEVICE, HOLDING DEVICE, AND MACHINING METHOD**

(30) Priority: 28.04.2021 JP 2021076839
(71) Applicant: Kuraray Noritake Dental Inc., Kurashiki-shi, Okayama 710-0801 (JP)
(72) Inventor: ITO, Sho, Miyoshi-shi, Aichi 470-0224 (JP); KATO, Makiko, Miyoshi-shi, Aichi 470-0224 (JP)
(74) Representative: D Young & Co LLP
(86) International application number: PCT/JP2022/018854
(87) International publication number: WO 2022/230863

(57) **Abstract**

A dental prosthesis can be cut more efficiently and precisely in a shorter time with no restrictions on the shape or the orientation of the dental prosthesis while improving the degree of freedom of the cutting. A cutting machining device (100) for a dental prosthesis (P) cuts a block shaped workpiece (W) with a machining tool (12) by changing a relative positional relationship between the machining tool (12) and the workpiece (W) in three dimensions. The workpiece (W) includes one plane (A1 plane) to which a base 6 for attachment to the cutting machining device (100) is fixed, and the cutting machining device includes a holding device as a positioning portion that positions the workpiece (W) with respect to the machining tool (12) so that the workpiece W is cut from a vertical direction with respect to a facing plane (A2 plane) that faces one plane (A1 plane).

## Description

### TECHNICAL FIELD

This invention relates to a cutting machining device 100, a holding device, and a machining method for a dental prosthesis.

### BACKGROUND ART

In a prosthesis treatment that restores a defect site of a tooth with an artificial material (prosthesis), such as a crown treatment and an implant treatment, a cutting machining device is known to make an artificial tooth by cutting a workpiece with a machining tool by changing the relative positional relationship between a machining tool such as an end mill and the workpiece such as a ceramic material in three dimensions (see, e.g., Patent Literature 1, Non-Patent Literature 1).

The cutting machining device described in Patent Literature 1 can hold a plurality of workpieces by a holding portion, enabling cutting of a plurality of workpieces on the same occasion and improving production efficiency. However, since the machining tool cuts the block shaped workpiece from only one direction (direction parallel to plane attached to holding portion), for example, the shape and orientation of the prosthesis that can be made from the workpiece are limited.

In contrast, the cutting machining device 100 described in Non-Patent Literature 1 allows cutting from two directions facing two planes parallel to a rotation axis by rotating the workpiece around a predetermined rotation axis. However, cutting from a direction facing a plane vertical to the rotation axis is not possible, and in this case, for example, the shape and the orientation of the prosthesis that can be made from the workpiece are also limited.

### CITATION LIST

### Patent Literature

Patent Literature 1: JP2015-54119A

### Non-Patent Literature

Non-Patent Literature 1: CEREC Primemill | CEREC | Product Solution | Dentsply Sirona Japan", [online], [search on March 15, 2021], Internet <URL : https://www.dentsplysirona.com/jajp/explore/cerec/cerec-primemill.html >

### SUMMARY

### Technical Problem

The present disclosure has been made in view of the above circumstances, and allows for more efficient and accurate cutting of a dental prosthesis in a shorter time, with no restrictions on the shape or the orientation of the prosthesis material, and with greater freedom in the cutting.

### Solution to Problem

In order to achieve the above object, a cutting machining device according to the present disclosure is a cutting machining device for a dental prosthesis that cuts a block shaped workpiece with a machining tool by changing a relative positional relationship between the machining tool and the workpiece in three dimensions. The workpiece includes one plane (A1 plane) to which a base for attachment to the cutting machining device is fixed. The cutting machining device includes a positioning portion that positions the workpiece with respect to the machining tool so that the workpiece is cut from a vertical direction with respect to a facing plane (A2 plane) that faces the one plane (A1 plane).

### Advantageous Effects

According to the present disclosure, a dental prosthesis can be cut more efficiently and accurately in a shorter time, with no restrictions on the shape or the orientation of the prosthesis material, and with greater freedom in the cutting.

### BRIEF DESCRIPTION OF DRAWINGS

FIG. 1 is a schematic diagram illustrating a holding device and a cutting machining device 100 for a dental prosthesis including this holding device according to a first embodiment.
FIG. 2 is a block diagram illustrating the schematic configuration of the cutting machining device 100 shown in FIG. 1.
FIG. 3A is a view describing the configuration and the operation of the holding device according to the first embodiment, and is a perspective view of the holding device.
FIG. 3B is a view describing the configuration and the operation of the holding device according to the first embodiment, and is a perspective view illustrating that a holding portion holding a plurality of workpieces is disposed in a reference position.
FIG. 3C is a view describing the configuration and the operation of the holding device according to the first embodiment, and is a side view illustrating that the holding portion is rotated by a 90° rotation angle from the reference position.
FIG. 4 is a view describing the workpiece and the dental prosthesis, (a) is a perspective view of the workpiece, (b) is a view illustrating an example of a prosthesis obtained by cutting the workpiece, (c) is a view illustrating another example of a prosthesis obtained by cutting the workpiece, (d) is a view illustrating a modified example of the workpiece, and (e) is a view illustrating a different modified example of the workpiece.
FIG. 5 is a flowchart showing an example of a flow of a machining processing (machining method) executed by the cutting machining device 100 of the first embodiment, and an image view of the machining at each step.
FIG. 6 is a flowchart showing another example of a flow of a machining processing (machining method) executed by the cutting machining device 100 of the first embodiment, and an image view of the machining at each step.

### DESCRIPTION OF EMBODIMENTS

### FIRST EMBODIMENT

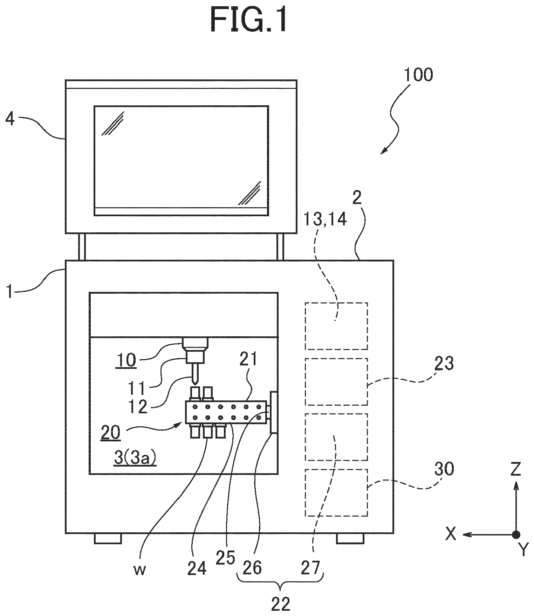

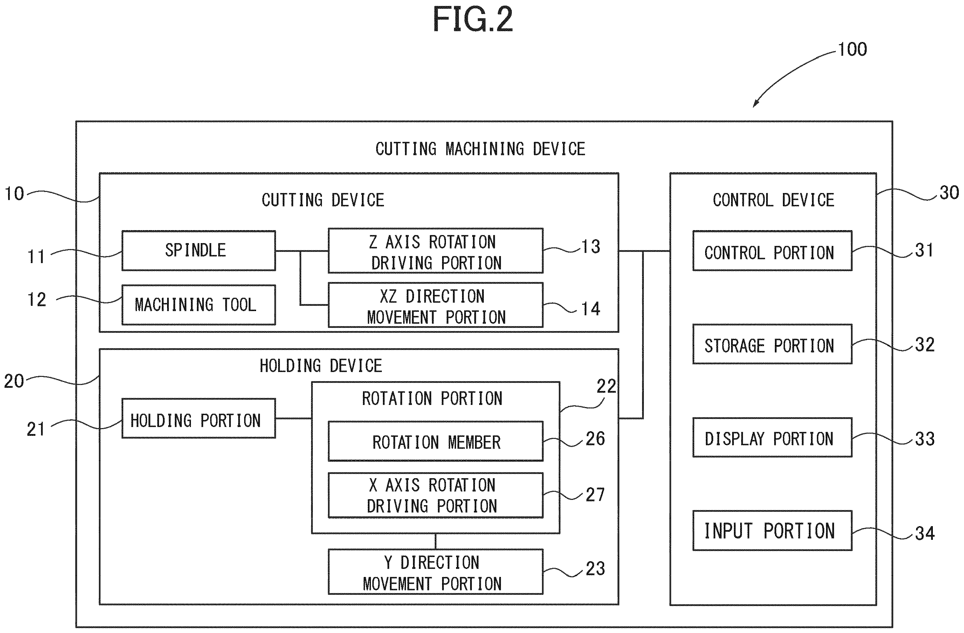

A holding device and a cutting machining device 100 for a dental prosthesis including the holding device according to a first embodiment will be described below with reference to the drawings. In this disclosure, "cutting" is intended to mean the overall machining that cuts a dental prosthesis out of a workpiece, and includes, for example, grinding. FIG. 1 is a view showing a schematic configuration of a cutting machining device 100 including a holding device 20 according to the first embodiment, and FIG. 2 is a block diagram illustrating the schematic configuration of the cutting machining device 100.

The cutting machining device 100 of the present embodiment is a cutting machining device 100 that cuts the workpiece W with a machining tool 12 to make a dental prosthesis P such as a crown, a bridge, or an implant by changing the relative positional relationship between the machining tool 12 and the block shaped workpiece W in three dimensions.

As shown in FIGS. 1, 2, the cutting machining device 100 according to the first embodiment includes a cutting device 10, the holding device 20, and a control device 30. The cutting machining device 100 also includes a dust collection pipe and/or a dust collector for collecting and removing dust in a machining space 3a of a machining chamber 3. The cutting machining device 100 may also include a coloring device for coloring a prosthesis material after machining and a sintering device for sintering. The cutting machining device 100 in this embodiment may include the holding device 20, other configurations, and other configurations that a known and appropriate CAD/CAM machining device has.

In this specification, X, Y, and Z axes of XYZ rectangular coordinates are set as illustrated in FIG. 1. The description in the specification is given as follows. In FIG. 1, the left direction is an X axis positive direction, the right direction is an X axis negative direction, the front direction is a Y axis positive direction, the back direction is a Y axis negative direction, the up direction is a Z axis positive direction, and the down direction is a Z axis negative direction. The X axis positive direction is the longitudinal direction of the holding portion 21 of the holding device 20, and is aligned with the direction in which a plurality of workpieces W are aligned. The rotational axis of the machining tool 12 of the cutting device 10 is aligned with the Z axis direction.

The cutting machining device 100 includes a housing 2 covered by a cover member 1. The machining chamber 3 for cutting the workpiece W is provided in the housing 2, and a door body 4 for loading and unloading the workpiece W and the prosthesis P after machining is openalby and closably provided in the housing 2.

The cutting device 10 is provided in the machining space 3a of the machining chamber 3 and cuts the workpiece W that is a raw material (dental material) of the dental prosthesis P. The cutting device 10 includes a spindle 11, a machining tool 12, a Z axis rotation driving portion 13, and an XZ direction movement portion 14. The Z axis rotation driving portion 13 rotates the spindle 11. The XZ direction movement portion 14 moves the spindle 11 along with the machining tool 12 in the X axis and Z axis directions. The cutting device 10 may have a function to further move the spindle 11 together with the machining tool 12 in the Y direction.

The Z axis rotation driving portion 13 includes an electric motor, a spindle motor, etc., and rotates the spindle 11 with the Z axis as the rotation axis. The rotation with the Z axis, for example, as the rotation axis is hereinafter referred to as "rotation about Z axis" for example. The XZ direction movement portion 14 includes a ball screw mechanism, a rack and pinion mechanism, a crank and slider mechanism, and a fluid cylinder that moves linearly by pneumatic, hydraulic or hydraulic pressure, and moves the spindle 11 in the X axis and Z axis directions.

The machining tool 12 includes, for example, a ball end mill, a radius end mill, a flat end mill, a tapered end mill, and a luffing end mill for roughing the workpiece W such as trochoid machining and a drill for internal machining such as hole drilling. For roughing such as trochoid machining, a machining tool that is provided with a cutting edge not only at the cutting edge but also at the neck is suitable.

The holding device 20 is provided in the machining space 3a of the machining chamber 3 and detachably holds the workpiece W and the prosthesis P after machining. The holding device 20 includes a holding portion 21 that holds one or more workpieces W via a base, a rotation portion 22 that rotates the holding portion 21 with the X axis as the rotation axis, and a Y direction movement portion 23 that moves the holding portion 21 and the rotation portion 22 in the Y axis direction.

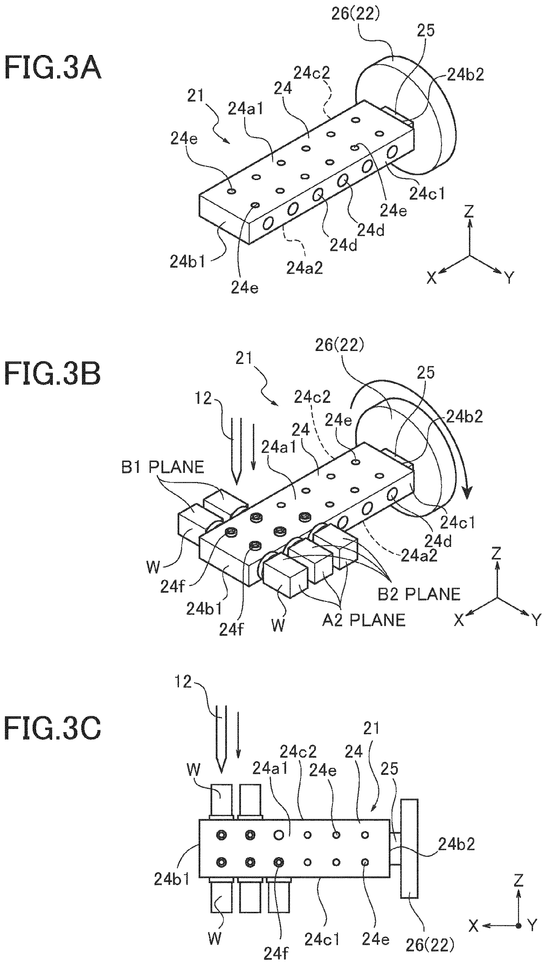

The holding portion 21 has a holding body 24 that holds the workpiece W and a spindle 25 that is attached to the rotation portion 22, as shown in FIG. 3A. The holding body 24 has a long rectangular solid, and the spindle 25 is provided along the longitudinal direction on one side plane (right side plane 24b2) of the holding body 24 in the longitudinal direction. When this spindle 25 is attached to the rotation portion 22, the spindle 25 and the holding body 24 are arranged to extend along the X axis direction.

The position of the holding body 24 is defined as the "reference position" of the holding portion 21 when the holding portion 21 is attached to the rotation portion 22, the holding body 24 is disposed along the X axis direction, and the two planes of the holding body 24 with the widest area are disposed in the up and down direction.

In the holding portion 21 at this "reference position", the two planes of the holding body 24 that are disposed opposite to each other in the up and down direction are referred to as a top plane (plane in Z axis positive direction) 24a1 and a bottom plane (plane in Z axis negative direction) 24a2, respectively. The two planes that are disposed opposite to each other in the longitudinal direction (X axis direction) are referred to as a left plane (plane in X axis positive direction) 24b 1 and a right plane (plane in X axis negative direction) 24b2, respectively. The two planes that are disposed opposite to each other in the shortitudinal direction (Y axis direction) are referred to as a front plane (plane in Y axis positive direction) 24c1 and a back plane (plane in Y axis negative direction) 24c2, respectively.

The holding body 24 is provided with a plurality of mounting holes 24d at predetermined intervals along the longitudinal direction (X axis direction) on both of the front plane 24c1 and the back plane 24c2 in the shortitudinal direction (width direction, Y axis direction). A pin 6b of the workpiece W is inserted into a plurality of mounting holes 24d. In addition, a plurality of screw holes 24e are provided at predetermined intervals on the top plane 24a1 of the holding body 24 at positions corresponding to the plurality of mounting holes 24d along both edges thereof. Each corresponding mounting hole 24d and screw hole 24e are connected to each other. By screwing a screw 24f as a mounting member into each of the screw holes 24e, the pin 6b inserted into the mounting hole 24d is secured, and the workpiece W can be stably mounted on the holding body 24. FIG 3B is a view illustrating the screw 24f screwed into the screw hole 24e only at the location where the workpiece W is attached. In contrast, an operator may temporarily screw the screws 24f into all the screw holes 24e, and when the pin 6b of the workpiece W is inserted, the operator may screw the screw 24f corresponding to the workpiece W until the pin 6b is fixed.

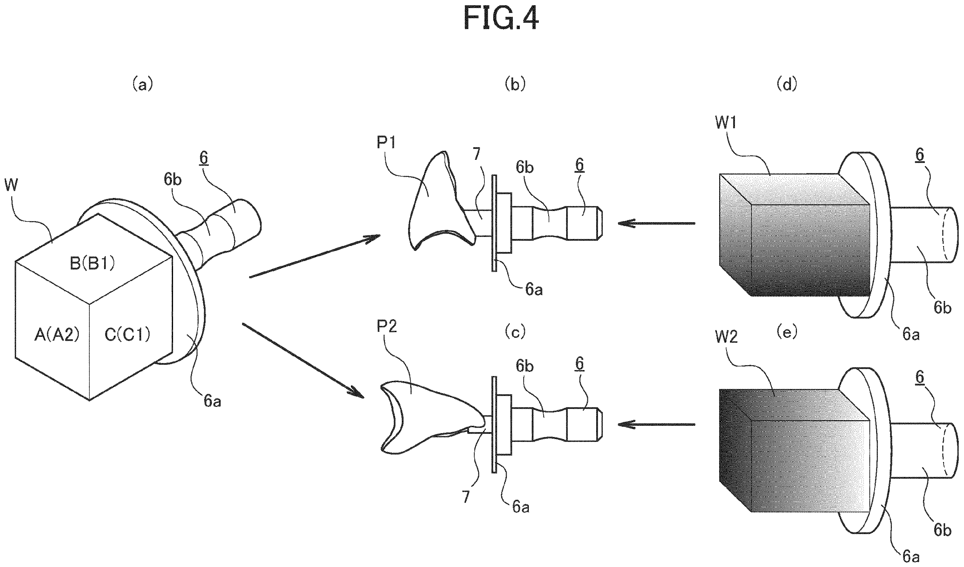

The workpiece W to be held in the holding portion 21 will now be described with reference to FIG. 4. FIG. 4 illustrates in (a) a perspective view of the workpiece W and in (b), (c) the prostheses P1, P2 that are made by cutting the workpiece W. For example, an abbreviated cubic block is used to make a single crown, and an abbreviated rectangular block is used to make a plurality of consecutive crowns. However, the shape is not limited thereto, and a known block having any shape may be used.

A metal base 6 is adhesively fixed on one plane of the workpiece W to attach the workpiece W to the holding portion 21. The base 6 has a base adhesive plane 6a and the pin 6b protruding from the base adhesive plane 6a. The prosthesesP1, P2 that are made by cutting the workpiece W is adhered and fixed to the base adhesive plane 6a by the support 7 that is a part of the block left by the cutting, but the support 7 is finally cut off from the prostheses P1, P2 together with the base 6.

In this specification, one plane of the workpiece W to which the base 6 is adhered and fixed is referred to as an "A1 plane", and the facing plane facing this A1 plane is referred to as an "A2 plane". These A1 and A2 planes are collectively referred to as an "A plane". One of the other four planes orthogonal to the A plane is referred to as a "B1 plane", and the facing plane facing this B 1 plane is referred to as a "B2 plane". These B1 and B2 planes are collectively referred to as a "B plane". One of the remaining two planes orthogonal to the A and B planes is referred to as a "C1 plane", and the facing plane facing this C1 plane is referred to as a "C2 plane". These C1 and C2 planes are collectively referred to as a "C plane". In FIG. 4, (a) illustrates that the A, B, and C planes are indicated by the symbols A, B, and C.

As shown in FIG. 3B, the pin 6b of the workpiece W is inserted into the mounting hole 24d of the holding body 24 and screwed with the screw 24f inserted into the screw hole 24e, so that the workpiece W is fixed to the holding body 24. As a result, the pin 6b extends along the width direction of the holding body 24 and is disposed so that the A2 plane faces perpendicular to the width direction. The workpiece W is attached to the holding body 24 with alignment such that the B1, B2 planes are disposed parallel to the top plane 24a1 and the bottom plane 24a2 of the holding body 24.

The material (raw material) of the workpiece W and the prosthesis P may be any material used as a dental material for a crown, a bridge, an implant, etc., including but not limited to a ceramic-based material, a resin-based material such as resin, etc. For example, a ceramic material is suitable as a prosthesis material because of their excellent biocompatibility and strength, and zirconia is most suitable among these materials because of its higher biocompatibility and strength, as well as its excellent esthetic properties. Zirconia can be molded, temporarily baked, or sintered.

The rotation portion 22 includes a cylindrical rotation member 26 that is attached to the body portion to be rotatable about the X axis, and an X axis rotation driving portion 27 that rotates the rotation member 26 about the X axis. The rotation member 26 is attached to the main body to be rotatable clockwise as indicated by the arrow in FIG. 3B, using an axis parallel to the X axis as the rotation axis. The X axis rotation driving portion 27 includes an electric motor and a spindle motor, and rotates the rotation member 26 about the X axis under the control of a control portion 31.

The rotation portion 22 rotates the holding portion 21 at rotational angles of 90° and 270° with respect to the "reference position" described above, fixes the holding portion 21 at this rotation position, and functions as a positioning portion for positioning the workpiece W. The rotation angles need not be strictly 90° and 270°, but should be approximately such an angle, and a slight error of ±10° is acceptable. More specifically, the rotation portion 22 should be able to rotate the holding portion 21 at rotation angles of 80° to 100° and 260° to 280° with respect to the reference position, and position the workpiece W at this rotation position. For more precise positioning of the workpiece W, the holding device 20 may be provided with stoppers by 90° and 270°, or may measure the rotation angle with an angle sensor or the like.

At the "reference position", i.e., at a rotation angle of 0°, the B1 plane of the workpiece W mounted on the back plane 24c2 is disposed facing the machining tool 12, as shown in FIG. 3B. Therefore, the machining tool 12 can cut the workpiece W from a vertical direction with respect to the B1 plane. In contrast, the rotation portion 22 rotates the holding portion 21 at a rotation angle of 90° (80° to 100°) and positions it in this position, so that the A2 plane of the workpiece W on the back plane 24c2 is positioned facing the machining tool 12, as shown in FIG. 3C. Therefore, the machining tool 12 can cut the workpiece W from a vertical direction with respect to the A2 plane.

When the rotation portion 22 further rotates the holding portion 21 and positions it at a rotation angle of 180° (170° to 190°) from the reference position, the B1 plane of the workpiece W mounted on the front plane 24c1 is disposed facing the machining tool 12. Therefore, the machining tool 12 can cut the workpiece W from a vertical direction with respect to the B1 plane. By further rotation, the rotation portion 22 further rotates the holding portion 21 and positions it at 270° (260° to 280°) from the reference position, the A2 plane of the workpiece W on the front plane 24c1 is disposed facing the machining tool 12. Therefore, the machining tool 12 can cut the workpiece W from a vertical direction with respect to the A2 plane.

The Y direction movement portion 23 comprises a ball screw mechanism, a rack and pinion mechanism, a crank and slider mechanism, a fluid cylinder that moves linearly by pneumatic, hydraulic or hydraulic pressure, etc. The Y direction movement portion 23 moves the holding portion 21 and the rotation portion 22 in the Y axis direction under the control of the control portion 31. With this configuration, the Y direction movement portion 23 can adjust the position of the workpiece W held by the holding portion 21 in the Y axis direction with respect to the machining tool 12, thereby improving the operation efficiency and the machining accuracy of the cutting.

Since each portion of the cutting device 10 and each portion of the holding device 20 can move and rotate in the directions described above, the relative positional relationship between the machining tool 12 and the workpiece W held in the holding portion 21 can be changed in any of the X, Y, and Z axis directions. Therefore, the three-dimensional machining of the workpiece W by the machining tool 12 becomes possible.

The control device 30 controls the entire operation of the cutting machining device 100. The control device 30 can also function as a design device for designing three-dimensional data to be used for machining the workpiece W.

The control device (NC device) 30 includes mainly a processor, a nonvolatile storage, a personal computer, and a microcomputer. The processor includes, for example, a Central Processing Unit (CPU). The nonvolatile storage includes a Read Only Memory (ROM), a Random Access Memory (RAM), a hard disk, and a flash memory. The personal computer includes a communication interface and an external recording media interface.

The control device 30 includes a display portion 33 and an input portion 34. The display portion 33 includes a liquid crystal display or the like, on which a screen and a message such as the operation screen of the cutting machining device 100 are displayed. The input portion 34 includes a touch panel, a keyboard, a mouse, and an operation button mounted on the LCD display, and can input various operation instructions, etc., to the control device 30.

The control device 30 functionally includes the control portion 31 and a memory portion 32. The control portion 31 includes a processor, and the memory portion 32 includes a RAM, a ROM, a hard disk, and a nonvolatile storage. The memory portion 32 also includes an external recording medium accessible via an external recording medium interface. The external recording media includes a SD card, a USB memory, a CD, and a DVD. The CPU controls the operation of the entire cutting machining device 100 by reading and executing the operation system and other programs stored in the memory portion 32 such as a ROM, with the RAM as the work area.

The memory portion 32 stores the above various programs and parameters used by the programs. Furthermore, the memory portion 32 stores three-dimensional data, etc., for use in the cutting of the workpiece W by the cutting machining device 100.

Based on this three-dimensional data, etc., the control portion 31 controls the cutting device 10 and the holding device 20, moves or rotates the spindle 11 and the holding portion 21, and cuts the workpiece W with the machining tool 12.

The three-dimensional data is a three-dimensional coordinate address representing the three-dimensional shape of the prosthesis P to be cut. The three-dimensional data is generated by an external design device or the like and is stored in the memory portion 32 using an external recording medium such as an SD card. The control device 30 may also acquire the three-dimensional data from a design device connected to the cutting machining device 100 via wired or wireless communication, and store it in the memory portion 32.

The control device 30 may also function as a design device, and the control device 30 may generate three-dimensional data. In this case, for example, a measuring device such as a 3D scanner is used to scan a patient's teeth, negative or positive, and based on the scan data, an operator designs the three-dimensional shape of the prosthesis P. The control portion 31 of the control device 30 generates three-dimensional data based on this design, and stores it in the memory portion 32. The three-dimensional data can be generated using a known method with a general purpose software, etc.

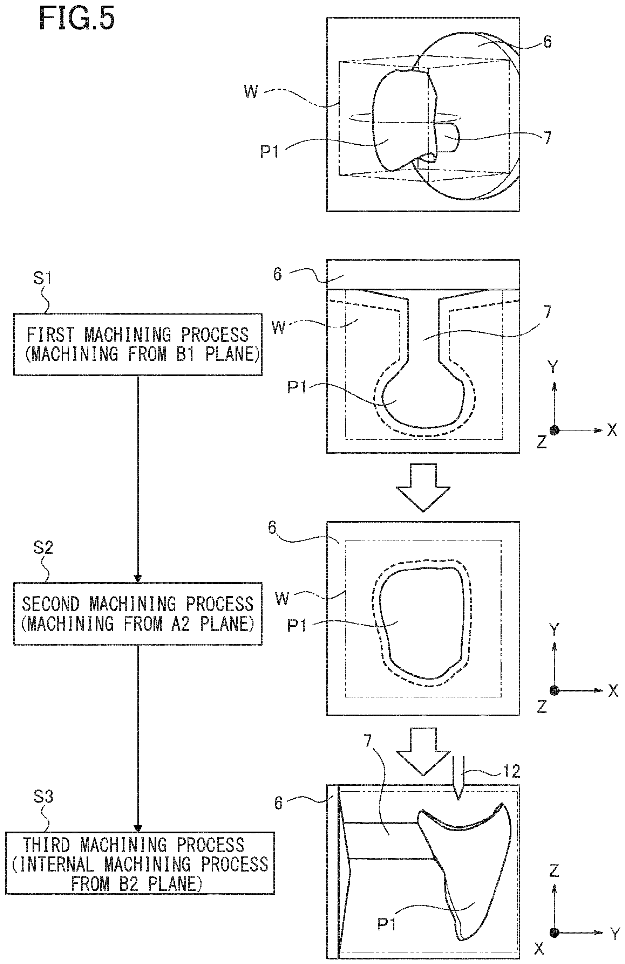

An example of the operation of the machining processing executed by the cutting machining device 100 with the configuration described above will be described below with reference to the flowchart and the image view of the machining at each step in FIG. 5. The figures on the right side in FIG. 5, from the top to the bottom, show the image view of the prosthesis P1 after the machining is completed, the image view of the workpiece W (prosthesis P1) after the first machining process from the B1 plane, the image view of the workpiece W (prosthesis P1) after the second machining process from the A2 plane, the image view of the workpiece W (prosthesis P1) after the third machining process from the B2 plane. In these image diagrams, the virtual chain line shows the block shaped workpiece W before the machining, and the dashed line shows the trajectory of the machining by the machining tool 12.

Here, the cutting device 10 roughs (trochoid machining) the workpiece W to make the prosthesis P1 (dental crown), and then performs the internal machining to form a hole to cover the prosthesis P1 to a patient's tooth or core. In this case, the case in which the support 7 is provided on the inner (tongue) side of the prosthesis P is described.

First, an operator such as a dental technician attaches one or more workpieces W to the holding portion 21 and attaches the holding portion 21 to the rotation member 26 of the rotation portion 22 so that the B1 plane of the workpiece W faces upward. The operator then closes the door body 4 and inputs an instruction to start the cutting from the input portion 34. The control portion 31 accepts this instruction input, obtains three-dimensional data for machining from the memory portion 32, controls the cutting device 10 and the holding device 20 based on this three-dimensional data, and starts the cutting.

First, in the first machining process of Step S1, the cutting device 10 performs the machining from the B1 plane of the workpiece W. For this purpose, the control portion 31 drives the Z axis rotation driving portion 13 and the XZ direction movement portion 14 to rotate the spindle 11 while moving it, without driving the X axis rotation driving portion 27. The control portion 31 also drives the Y direction movement portion 23 to move the holding device 20 in the Y direction. As a result, the machining tool 12 moves in the XYZ directions relative to the workpiece W while rotating, and from the B1 plane (perpendicular to B1 plane), the workpiece W is machined trochoidally while drawing the trajectory shown by the dashed line (see FIG. 3B).

In the second machining process of the next Step S2, the cutting device 10 performs the machining of the workpiece W from the A2 plane. For this purpose, the control portion 31 drives the X axis rotation driving portion 27 to rotate the rotation member 26 by 90° from the reference position together with the prosthesis P1 (workpiece W) and the holding portion 21 so that the A2 plane of the workpiece W faces the machining tool 12 (see FIG. 3C).

Next, the control portion 31 drives the Z axis rotation driving portion 13 and the XZ direction movement portion 14 to rotate the spindle 11 while moving it, and drives the Y direction movement portion 23 to move the holding device 20 in the Y direction. As a result, the machining tool 12 moves in the XYZ directions relative to the workpiece W while rotating, and from the A2 plane (perpendicular to A2 plane), the workpiece W is machined trochoidally while drawing the trajectory shown by the dashed line.

After the completion of Step S2 and before starting the next Step S3, the finishing (finishing process) is performed from the B1 and B2 planes of the workpiece W to form the final tooth crown shape and the support 7. More specifically, with the A2 plane of the workpiece W facing the machining tool 12, the X axis rotation driving portion 27 is driven to rotate the rotation member 26 by 270° together with the prosthesis P1 (workpiece W) and the holding portion 21 so that the B1 plane of the workpiece W faces the machining tool 12. The machining tool 12 then performs the finishing on the prosthesis P1 from the B1 plane. Next, the X axis rotation driving portion 27 is driven to rotate the rotation member 26 by 180° together with the prosthesis P1 and the holding portion 21 to face the B2 plane of the workpiece W to the machining tool 12. Then, the machining tool 12 performs the finishing on the prosthesis P1 from the B2 plane.

This finishing process may be performed between Steps S2 and S3 or after Step S3. The machining tool 12 used in this finishing process may be the same or different from that used in the roughing (trochoid machining) in Step S2, and if different, the machining tool 12 may be replaced between Steps S2 and S3.

In the next Step S3, the third machining process, the cutting device 10 performs the internal machining of the workpiece W from the B2 plane. For this purpose, the control portion 31 drives the X axis rotation driving portion 27 to rotate the rotation member 26 by 180° from the reference position together with the prosthesis P1 (workpiece W) and the holding portion 21 to face the B2 plane of the workpiece W to the machining tool 12. The machining tool 12 used in the internal machining in Step S3 may be the same or different from the one used in the roughing (trochoid machining) in Step S2, and if different, the machining tool 12 can be replaced between Steps S2 and S3.

Next, the control portion 31 drives the Z axis rotation driving portion 13 and the XZ direction movement portion 14 to rotate the spindle 11 while moving it, and drives the Y direction movement portion 23 to move the holding device 20 in the Y direction. As a result, the machining tool 12 moves in the XYZ directions relative to the workpiece W while rotating, and from the B2 plane (perpendicular to B2 plane), the internal plane is machined on the workpiece W to form a hole.

The above results in the prosthesis P1 with the support 7 on the tongue side, as shown in the upper right view in FIG. 5. When a plurality of workpieces W are attached to the holding portion 21, the cutting machining device 100 can cut each of the workpieces W by repeating the processes of Steps S1 to S3. After the process of Step S1 is performed for all workpieces W, the cutting machining device 100 can also perform the processes of Steps S2 and S3 for all workpieces W, respectively, in the same manner.

When the workpiece W is mounted on both sides of the holding portion 21, the control portion 31 drives the XZ direction movement portion 14 and the Y direction movement portion 23 to move the machining tool 12 relative to the holding portion 21 after the machining of the workpiece W on one side of the front plane 24c1 or the back plane 24c2 is completed. By this movement, the machining tool 12 performs the first machining process from the B1 plane of the workpiece W on the other side, and then the rotation portion 22 rotates the holding portion 21 by 90° (270° from the reference position). Then, the rotation portion 22 rotates the holding portion 21 by another 90° (360° from reference position), and the machining tool 12 performs the third machining process from the B2 plane. After performing Step S1 process for all workpieces W on both sides of the front plane 24c1 and the back plane 24c2, Steps S2 and S3 can be performed for all workpieces W, respectively, in the same manner.

The prosthesis P1 manufactured in the above process is provided with the support 7 on the tongue side. The support 7 is detached from the prosthesis P1 and the cut plane is polished by finishing or the like.

By the way, when the upper and lower teeth are meshed, the lower front teeth (central incisors, lateral incisors, and canines) are inserted inside the upper front teeth (central incisors, lateral incisors, and canines). Therefore, if the shape of the tongue side of the crown (prosthesis) used as the upper front tooth is not precisely formed as designed, the occlusal relationship set at the time of crown design may shift, and the user of the crown may feel uncomfortable.

Therefore, when manufacturing the prosthesis P such as a front tooth, it is desirable to ensure that the shape of the tongue side of the prosthesis P does not change as much as possible from the designed shape by grinding the cut plane of the support 7. However, grinding the shape of the tongue side as designed required a high level of skill. In contrast, the back teeth (molars) can be either the prosthesis P1 in (b) of FIG. 4 or the prosthesis P2 in (c) of FIG. 4, but the prosthesis P1 with the support 7 on the tongue side is suitable because the shape of the upper plane or the lower plane should be as designed rather than the tongue side due to the bite.

Therefore, the inventors thought that if the workpiece W could be cut with the support 7 provided at the tip of the prosthesis P, as in the prosthesis P2 shown in (c) of FIG. 4, the tongue side could be machined as designed. In addition, if the support 7 is provided at the tip of the prosthesis P, the area of the cut plane can be reduced more, and the change in shape due to the grinding can be effectively suppressed, and the user is less likely to experience discomfort, etc.

Here, when manufacturing the prosthesis P, it is necessary to form a hole to cover a tooth, etc., as explained in the above third machining process, and when the support 7 is provided at the tip, this hole must be machined from the root side, i.e., the A2 plane of the workpiece W. However, the machining device described in Patent Literature 1 allows the cutting from the B plane, but does not have the idea of machining from the A plane, and the machining device in Non-Patent Literature 1 allows the machining from the B and C planes, but not from the A plane.

In contrast, the cutting machining device 100 of this embodiment rotates the workpiece W by the holding device 20 to face the A2 plane of the workpiece W to the machining tool 12, and enables the cutting from the vertical direction to the A2 plane by the machining tool 12. This enables the machining tool 12 to cut the workpiece W so that the support 7 is provided at the tip.

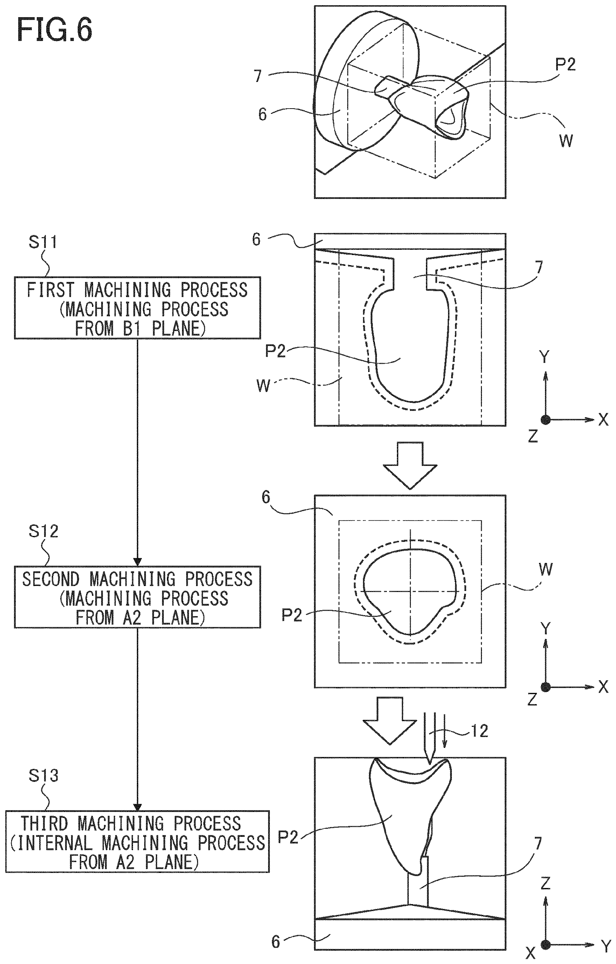

The flow of the machining processing in cutting the workpiece W so that the support 7 is provided at the tip of the prosthesis P will be explained below, referring to the flowchart in FIG. 6 and the image views of the machining in each process. The figures on the right side in FIG. 6, from the top to the bottom, are the image view of the prosthesis P2 after the machining is completed, the image view of the workpiece W (prosthesis P2) after the first machining process from the B1 plane, and the image view of the workpiece W (prosthesis P2) after the second machining process from the A2 plane. In these image planes, the virtual chain line shows the block shaped workpiece W before machining, and the dashed line shows the trajectory of the machining by the machining tool 12.

Here, as in the machining processing shown in FIG. 5, an operator attaches one or more workpieces W to the holding portion 21 and attaches the holding portion 21 to the rotation member 26 of the rotation portion 22 so that the B1 plane of the workpiece W faces up. The operator then closes the door body 4 and inputs an instruction to start the cutting from the input portion 34.

Then, in the first machining process of Step S11, the cutting device 10 performs the machining from the B1 plane of the workpiece W. In this case, the control portion 31 also drives the Z axis rotation driving portion 13 and the XZ direction movement portion 14 to rotate the spindle 11 while moving it, without driving the X axis rotation driving portion 27. The control portion 31 also drives the Y direction movement portion 23 to move the holding device 20 in the Y direction. As a result, the machining tool 12 moves in the XYZ directions relative to the workpiece W while rotating, and from the B1 plane (perpendicular to B1 plane), the workpiece W is machined trochoidally while drawing the trajectory shown by the dashed line (see FIG. 3B).

In the second machining process in the next Step S12, the cutting device 10 performs the machining of the workpiece W from the A2 plane. In this case, the control portion 31 also drives the X axis rotation driving portion 27 to rotate the rotation member 26 together with the prosthesis P1 (workpiece W) and the holding portion 21 by 90° from the reference position to face the A2 plane of the workpiece W to the machining tool 12 (see FIG. 3C).

Next, the control portion 31 drives the Z axis rotation driving portion 13 and the XZ direction movement portion 14 to rotate the spindle 11 while moving it, and drives the Y direction movement portion 23 to move the holding device 20 in the Y direction. As a result, the machining tool 12 moves in the XYZ directions relative to the workpiece W while rotating, and from the A2 plane (perpendicular to A2 plane), the workpiece W is machined trochoidally while drawing the trajectory shown by the dashed line.

After the completion of Step S12 and before starting the next Step S13, the finishing is performed from the B1 and B2 planes of the workpiece W to form the final crown shape and the support 7. More specifically, from the state where the A2 plane of the workpiece W is facing the machining tool 12, the X axis rotation driving portion 27 is driven to rotate the rotation member 26 by 270° together with the prosthesis P2 (workpiece W) and the holding portion 21 so that the B1 plane of the workpiece W faces the machining tool 12. The machining tool 12 then performs the finishing on the prosthesis P2 from the B1 plane. Next, the X axis rotation driving portion 27 is driven to rotate the rotation member 26 by 180° together with the prosthesis P2 and the holding portion 21 to face the B2 plane of the workpiece W to the machining tool 12. Then, the machining tool 12 performs the finishing on the prosthesis P2 from the B2 plane.

This finishing process may be performed between Steps S12 and S13 or after Step S13. The machining tool 12 used in this finishing process may be the same or different from the one used in the roughing (trochoid machining) of Step S12, and if different, the machining tool 12 may be replaced between Steps S12 and S13.

In the next Step S13, the third machining process, the cutting device 10 performs the internal machining of the workpiece W from the A2 plane. In this case, the A2 plane of the prosthesis P2 (workpiece W) faces the machining tool 12, so there is no need to rotate the holding portion 21, and the hole can be formed by machining the internal plane of the workpiece W with the machining tool 12 for the internal plane machining. Here, if the finishing process is performed before the third machining process in Step S13, the holding portion 21 is rotated so that the A2 plane of the prosthesis P2 faces the machining tool 12. The machining tool 12 used in the internal machining in Step S13 may be the same or different from the one used in the roughing (trochoid machining) in Step S12, and if different, the machining tool 12 can be replaced between Steps S12 and S13.

The above results in the prosthesis P2 with the support 7 on the tip side, as shown in the upper right view in FIG. 6. Again, when a plurality of workpieces W are attached to the holding portion 21, the cutting machining device 100 can cut the plurality of workpieces W by repeating the processes of Steps S11 to S13 for each individual workpiece W or by advancing the process while performing one process for all workpieces W. When the workpiece W is mounted on both sides of the holding portion 21, the cutting machining device 100 can also cut the workpiece W mounted on the other side of the holding portion 21 by following the same procedure as described above.

The prosthesis P2 with the support 7 on the tip side, made as described above, has a smaller area of the connection between the prosthesis P2 and the support 7 than the prosthesis P1 with the support 7 on the tongue side. This makes the operation of detaching and grinding the support 7 easier and faster, thereby improving operation efficiency. In addition, the deviation between the shape of the tip and the design can be further suppressed, and in particular, the shape of the tongue side can be made as designed, which improves the accuracy of the manufacturing of the prosthesis P2 and the user's feeling of use.

### MODIFIED EXAMPLE OF WORKPIECE W

In FIG. 4, (d) and (e) show a modified example of the workpieces W1, W2. The workpiece W used in the first embodiment above includes a block body of one color, such as white or milky white. Therefore, the manufactured prosthesis P is uniform in color and shade. In contrast, natural teeth are darker in color at the root and gradually become lighter toward the tip. For this reason, the prosthesis P is sometimes colored to more closely resemble natural teeth.

In contrast, the workpieces W1, W2 in the modified example are dental materials made with varying tones (color or shade) or translucency to imitate the color tone of natural teeth. More precisely, the workpiece W1 is a dental material with a gradation in which the color tone or translucency changes continuously (darker or denser color or lower translucency) from one plane (B1 plane) that intersects the A2 plane to the other plane (B2 plane) that faces this one plane. The gradation-applied dental material may be a dental material that has a gradation in color tone or translucency at the time of machining the workpiece W, for example, a multi-layer type resin block or a zirconia sintered material. Furthermore, the gradated dental material may be a multi-layer type zirconia pseudosintered body or a zirconia compact that has a color tone or a translucency gradient after sintering, such as a multi-layer type zirconia pseudosintered body or a zirconia compact. It is not necessary that the zirconia pseudosintered or the zirconia compact has a color or a translucency gradation at the time of the zirconia pseudosintered or the zirconia compact. In the case of such a workpiece W1, it is cut according to the process described using FIG. 5 to obtain the prosthesis P1 with the support 7 on the tongue side, as shown in the upper right portion in FIG. 5 and (b) in FIG. 4. Moreover, as with natural teeth, the prosthesis P1 with a darker color or a density on the root side and a gradually lighter or lighter color from the root to the tip, or the prosthesis P1 with a low translucency on the root side and a gradually higher translucency from the root to the tip, can be obtained. This eliminates the need for coloring and other processes, resulting in a more efficient and high quality prosthesis P1 that more closely resembles natural teeth.

On the other hand, the workpiece W2 is a dental material with a gradation that continuously changes in color tone or translucency (becomes darker or denser in color or less translucent) from the A1 plane to the facing A2 plane. In the case of such a workpiece W2, by cutting it according to the process described using FIG. 6, the prosthesis P2 with the support 7 at the tip can be obtained, as shown in the upper right corner in FIG. 6 and (c) in FIG. 4. In this case, as with natural teeth, the prosthesis P2 with a darker color or a density on the root side and a gradually lighter or lighter color from the root to the tip, or the prosthesis P2 with a lower translucency on the root side and a gradually higher translucency from the root to the tip is obtained. This eliminates the need for coloring and other processes, resulting in a more efficient and higher quality prosthesis P2 that more closely resembles natural teeth.

As explained above, the cutting machining device 100 of the first embodiment is a cutting device for the dental prosthesis P, in which the relative positional relationship between the machining tool 12 and the block shaped workpiece W is changed in three dimensions, and the workpiece W is cut and machined by the machining tool 12. The workpiece W has the base 6 fixed to one plane (A1 plane) for attachment to the cutting machining device 100. The cutting machining device 100 includes the positioning portion (holding device 20) that positions the workpiece W with respect to the machining tool 12 so that the workpiece W is machined from a vertical direction with respect to the facing plane (A2 plane) facing the one plane (A1 plane).

The machining method executed by the cutting machining device 100 of the first embodiment is a method of machining the dental prosthesis P in which the relative positional relationship between the machining tool 12 and the block shaped workpiece W is changed in three dimensions and the workpiece W is cut by the machining tool 12. The machining method has a positioning process, in which the workpiece W, to which the base 6 is fixed on one plane (A1 plane), is positioned with respect to the machining tool 12 so that it is cut from the vertical direction with respect to the facing plane (A2 plane) that facing the one plane (A1 plane).

Therefore, the cutting machining device 100 and the machining method of the first embodiment make it possible to machine the workpiece W from the facing plane (A2) of the workpiece W, that faces one plane (A1 plane) to which the base 6 is fixed, which was difficult to machine in the conventional technology. Therefore, the cutting machining device 100 and the machining method of the first embodiment can manufacture the prosthesis P1 in a shape and an orientation more appropriate to the type, design, and intended use of the prosthesis P1 to be manufactured. As a result, there are no restrictions on the shape and the orientation of the prosthesis P. As a result, the cutting machining device 100 and the machining method can cut and machine the prosthesis P more efficiently, in a shorter time, and with higher accuracy.

In addition to the cutting from the vertical direction to the side plane (B 1 plane) of the workpiece W, as in the conventional method, the cutting machining device 100 of the first embodiment can also cut from the vertical direction to the A2 plane of the workpiece W. This enables the roughing, etc., by trochoid machining from two directions, and significantly shortens the machining time.

The positioning portion (holding device 20) of the first embodiment has the holding portion 21 that holds the workpiece W via the base 6, and the rotation portion 22 that rotates the holding portion 21 with an axis (X axis) parallel to one plane (A1 plane) as the rotation axis. The rotation portion 22 is configured to position the workpiece W by rotating the holding portion 21 by a rotation angle of 80° to 100° with respect to a predetermined reference position. This configuration allows the positioning portion (holding device 20) to rotate the workpiece W and position the workpiece W stably with one plane (A2 plane) appropriately facing the machining tool 12, suppressing wobble and unforeseen movement. Therefore, the machining tool 12 can perform the machining from one plane (A2 plane) with higher accuracy.

The holding portion 21 of the first embodiment is configured to hold a plurality of workpieces W via the base 6 so that they are aligned in a predetermined direction, and the rotation portion 22 is configured to rotate the holding portion 21 using an axis (X axis) parallel to the alignment direction of a plurality of workpieces W as the rotation axis. This configuration enables the cutting machining device 100 to process a plurality of workpieces W of the same or different materials on the same occasion without replacing the workpieces W using the same three-dimensional data, thereby further improving production efficiency.

The holding portion 21 of the first embodiment is configured to hold the workpiece W on both sides along the axis of rotation, so that more workpieces W of the same or different materials can be processed on the same occasion, further improving production efficiency. The rotation portion 22 should be configured to rotate the holding portion 21 by a rotation angle of 80° to 100° and 260° to 280° with respect to a predetermined reference position to position the workpiece W. This configuration allows the holding portion 21 to precisely face the A2 plane of the workpiece W mounted on one plane (back plane 24c2) of the holding portion 21 and the A2 plane of the workpiece W mounted on the facing plane (front plane 24c1), respectively, to the machining tool 12. Thus, the machining tool 12 can more appropriately perform the cutting from the A2 plane.

The cutting machining device 100 of the first embodiment can also cut the workpieces W1, W2 with a gradation that continuously changes in color tone or a translucency from one plane (A1 plane) to the facing plane (A2 plane) or from one plane (B1 plane) that intersects one plane to the other plane (B2 plane) that faces the one plane. The gradation can also be applied to the workpieces W1, W2. This allows the coloring process after the cutting and the finishing to be omitted, resulting in more efficient and higher quality prostheses P1, P2 that more closely resembles natural teeth.

The holding device 20 of the first embodiment is a holding device that is provided in the cutting machining device 100 for the dental prosthesis P that cuts the block shaped workpiece W with the machining tool 12 by changing the relative positional relationship between the machining tool 12 and the workpiece W in three dimensions, and holds the workpiece W. The holding device 20 includes the holding portion 21 that holds a plurality of workpieces having one plane (A1 plane) to which the base 6 is fixed through the base 6 so that a plurality of workpieces W are aligned in a predetermined direction, and the rotation portion 22 that rotates the holding portion 21 with an axis parallel to the alignment direction of a plurality of workpieces W (X axis) as a rotation axis, and positions the workpiece W relative to the machining tool 12 so that the workpiece is cut from the vertical direction with respect to the facing plane (A2 plane) that faces the one plane (A1 plane).

Therefore, the cutting machining device 100 including the holding device 20 enables the machining of the workpiece W from the facing plane (A2 plane) facing the one plane (A1 plane), and also enables efficient and highly accurate machining of a plurality of workpieces W in a short time. In addition, a plurality of workpieces W of the same material or a plurality of workpieces W of different materials can be held by the holding portion 21, and a plurality of workpieces W of different materials can be machined on the same occasion without the need to replace the workpiece W or 3D data, thereby improving production efficiency. The holding device 20 of the first embodiment can also be attached to an existing cutting device. As a result, the holding device 20 can be provided to the cutting machining device 100 or the existing cutting device, with no restrictions on the shape and orientation of the dental prosthesis P, increasing the degree of freedom of cutting and allowing the dental prosthesis to be cut more efficiently and precisely in a shorter time.

The above embodiments of the invention have been described in details with the drawings. Each of the above embodiments is only an example of the invention, and the invention is not limited only to the configuration of each of the above embodiments. It is, of course, included in the present invention even if there are design changes, etc., that do not depart from the gist of the invention.

For example, in the first embodiment, a plurality of workpieces W can be placed side by side on both sides of the holding body 24 of the holding portion 21, and the rotation portion 22 rotates the holding portion 21 by a rotational angle of 80° to 100° and 260° to 280° with respect to the reference position. However, it is not limited to this configuration, and other different embodiments can be made, for example, in which one or more workpieces W can be mounted only on the front plane 24c1 or the back plane 24c2 of the holding body 24 of the holding portion 21. The rotation portion 22 can also be configured to rotate the holding portion 21 at least by 80° to 100° (preferably 90°) clockwise or counterclockwise, and to position the workpiece W at this rotation position. This configuration also allows the workpiece W mounted on the front plane 24c1 or the back plane 24c2 to be cut by the machining tool 12 from a vertical direction with respect to the A2 plane, increasing the degree of freedom of machining and enabling more efficient machining.

The cutting machining device 100 of the first embodiment includes the holding portion 21 and the rotation portion 22 in the holding device 20, which functions as a positioning part for positioning the workpiece W to the machining tool 12 by rotating it. However, the configuration of the positioning portion is not limited to this, as long as the workpiece W is positioned relative to the machining tool 12. As another different embodiment of the positioning section, for example, the workpiece W can be positioned relative to the machining tool 12 by configuring the machining tool 12 to be rotatable around the X axis (around axis parallel to longitudinal direction of holding portion 21) or by moving the machining tool 12 in the XYZ directions. This configuration also allows the holding device 20, that is the positioning section, to face the A2 plane of the workpiece W and the machining tool 12, and the machining tool 12 can machine the workpiece W from a direction perpendicular to the A2 plane.

Although the cutting machining device 100 of the first embodiment rotates the holding portion 21 by the X axis rotation driving portion 27, such as an electric motor, it is not limited to this configuration and can be manually rotated, for example.

### CROSS-REFERENCE TO RELATED APPLICATION

The present application is based on and claims priority to Japanese Patent Application No. 2021-076839, filed on April 28, 2021, the disclosure of which is hereby incorporated by reference in its entirety.

## Claims

1. A cutting machining device for a dental prosthesis that cuts a block shaped workpiece with a machining tool by changing a relative positional relationship between the machining tool and the workpiece in three dimensions, wherein
the workpiece includes one plane (A1 plane) to which a base for attachment to the cutting machining device is fixed, and
the cutting machining device comprises a positioning portion that positions the workpiece with respect to the machining tool so that the workpiece is cut from a vertical direction with respect to a facing plane (A2 plane) that faces the one plane (A1 plane).

2. The cutting machining device according to claim 1, wherein
the positioning portion includes a holding portion that holds the workpiece through the base, and a rotation portion that rotates the holding portion with an axis parallel to one plane of the workpiece as a rotation axis, and
the rotation portion is configured to rotate the holding portion by a rotation angle of 80° to 100° with respect to a predetermined reference position to position the workpiece.

3. The cutting machining device according to claim 2, wherein
the holding portion is configured to hold a plurality of the workpieces through the base so that the workpieces are aligned in a predetermined direction, and
the rotation portion is configured to rotate the holding portion with an axis parallel to an alignment direction of the plurality of workpieces as a rotation axis.

4. The cutting machining device according to claim 2, wherein the holding section is configured to hold the workpiece on both sides along the rotation axis.

5. The cutting machining device according to claim 2, wherein the rotation portion is configured to rotate the holding portion by a rotation angle of 80° to 100° and 260° to 280° relative to a predetermined reference position to position the workpiece.

6. The cutting machining device according to claim 1, wherein the cutting machining device is configured to cut the workpiece with a gradation continuously changing in color tone or translucency from the one plane (A1 plane) to the facing plane (A2 plane) or from the one plane (B1 plane) that intersects the one plane to the other plane (B2 plane) that faces the one plane.

7. The cutting machining device according to claim 1, wherein the cutting from a vertical direction includes machining of the workpiece at least at a side plane of the machining tool.

8. The cutting machining device according to claim 1, wherein the cutting from a vertical direction includes machining the workpiece trochoidally.

9. A holding device provided in a cutting machining device for a dental prosthesis that cuts a block shaped workpiece with a machining tool by changing a relative positional relationship between the machining tool and the workpiece in three dimensions, and holds the workpiece, the holding device comprising:
a holding portion that holds a plurality of the workpieces having one plane (A1 plane) to which a base is fixed through the base so that the workpieces are aligned in a predetermined direction; and
a rotation portion that rotates the holding portion with an axis parallel to an alignment direction of the plurality of workpieces as a rotation axis, and positions the workpiece with respect to the machining tool so that the workpiece is cut from a vertical direction with respect to a facing plane (A2 plane) that faces the one plane (A1 plane).

10. A method for cutting a block shaped dental prosthesis with a machining tool by changing a relative positional relationship between the machining tool and the workpiece in three dimensions, the method comprising:
a positioning process of positioning the workpiece having one plane (A1 plane) to which a base fixed with respect to the machining tool so that the workpiece is cut from a vertical direction with respect to a facing plane (A2 plane) that faces the one plane (A1 plane).

11. The machining method according to claim 10, wherein the method comprises a machining process of cutting the workpiece from a vertical direction, and the machining process including a process of machining the workpiece at least at a side plane of the machining tool.

12. The machining method according to claim 10, wherein the method comprises a machining process of cutting the workpiece from a vertical direction, and the machining process includes a process of machining the workpiece trochoidally.
